# EUROPEAN PATENT SPECIFICATION

(11) **EP 4 181 120 B1**
(45) Date of publication and mention of the grant of the patent: **18.11.2026**
(21) Application number: 21898527.3
(22) Date of filing: 22.11.2021
(51) Int. Cl.: G10L 15/22, G10L 15/26, G10L 25/90, G10L 25/63, G06F 3/16, G06F 40/30

(54) **ELECTRONIC DEVICE FOR GENERATING RESPONSE TO USER INPUT AND OPERATION METHOD OF SAME**
ELEKTRONISCHE VORRICHTUNG ZUR ERZEUGUNG EINER ANTWORT AUF EINE BENUTZEREINGABE UND BETRIEBSVERFAHREN DAFÜR
DISPOSITIF ÉLECTRONIQUE POUR GÉNÉRER UNE RÉPONSE À UNE ENTRÉE D'UN UTILISATEUR ET SON PROCÉDÉ DE FONCTIONNEMENT

(30) Priority: 25.11.2020 KR 20200160312
(43) Date of publication of application: 17.05.2023
(73) Proprietor: Samsung Electronics Co., Ltd., Suwon-si, Gyeonggi-do 16677 (KR)
(72) Inventor: LEE, Jongwon, Suwon-si, Gyeonggi-do 16677 (KR); KIM, Kichul, Suwon-si, Gyeonggi-do 16677 (KR); BYEON, Jooyong, Suwon-si, Gyeonggi-do 16677 (KR)
(74) Representative: Gulde & Partner
(86) International application number: PCT/KR2021/017180
(87) International publication number: WO 2022/114701

(56) References cited:
- EP-A1- 2 763 135
- JP-A- 2016 109 897
- KR-A- 20190 068 021
- KR-A- 20200 113 105
- KR-A- 20200 119 035
- KR-B1- 102 041 617
- KR-B1- 102 041 617
- US-A1- 2020 302 927
- US-A1- 2020 327 888
- HU TIANRAN THU@CS ROCHESTER EDU ET AL: "Touch Your Heart A Tone-aware Chatbot for Customer Care on Social Media", PROCEEDINGS OF THE 33RD ACM/IEEE INTERNATIONAL CONFERENCE ON AUTOMATED SOFTWARE ENGINEERING, ACMPUB27, NEW YORK, NY, USA, 21 April 2018 (2018-04-21), pages 1 - 12, XP058699935, ISBN: 978-1-4503-5823-1, DOI: 10.1145/3173574.3173989

## Description

### [Technical Field]

The disclosure relates to an electronic device and operation method thereof for generating a response to a user input.

### [Background Art]

With the advancement of mobile communication technology and processor technology, portable electronic devices (hereinafter, electronic devices) can implement various functions in addition to conventional call functions. Recently, with the development of technologies related to artificial intelligence (AI), AI-related functions are being included in portable electronic devices. For example, voice assistants such as Bixby, Alexa, and Google Assistant are being implemented in portable electronic devices as AI-related functions. Such a voice assistant may understand a user's voice or text command, perform a corresponding action, and provide a voice or text response to the user at the same time. The voice assistant can provide both visual results such as a photograph, screen user interface (UI), and text, and auditory results such as music and synthesized speech, so that the voice assistant's response can be recognized immediately. US 2020/0302927 A1 discloses an electronic device providing a response and a method of operating the same. US 2020/0327888 A1 discloses a dialogue system configured to store relationship information and to collect context information associated with a content of a message in response to receiving an utterance including a receiver and the content of the message input from the user. The publication "Touch Your Heart: A Tone-aware Chatbot for Customer Care on Social Media" (Tianran Hu et al.) discloses a tone-aware chatbot that generates toned responses to user requests on social media. EP 2 763 135 A1 discloses a voice recognition apparatus and method for providing response information. KR 102 041 617 B1 discloses a method and device for providing responses in various styles using artificial intelligence, which can determine a response style based on personality information of artificial intelligence and then use this to provide a response to a user input.

### [Disclosure of Invention]

### [Technical Problem]

When a voice assistant provides responses to users by using predefined templates aimed at responding to specific groups or classes, it can perform an operation according to the user's basic intention but it may fail to provide a service that draws the user's interest and sympathy. The voice assistant based on pre-written templates cannot reflect the user's emotion and tone, so it may be unable to provide a customized service that reflects the user's individual characteristics. A voice service that does not reflect the user's individual characteristics may not only deteriorate the user's experience but also cause a decrease in usage.

Various embodiments of the disclosure are to provide an appropriate response to a user by reflecting characteristics and expressions about the user's current situation and topic to be discussed.

### [Solution to Problem]

According to an embodiment, an electronic device is provided as defined in the appended claims.

According to an embodiment, an operation method is provided as defined in the appended claims.

### [Advantageous Effects of Invention]

According to various embodiments of the disclosure, it is possible not only to generate a response to a user's input by reflecting the characteristics of a specific user, but also to provide responses in various styles for a specific user according to the time and/or place in consideration of the situation specified in user's input (voice, text) and context.

According to various embodiments of the disclosure, it is possible to increase the familiarity and intimacy of the user by providing a satisfactory response to the user, thereby inducing the use of the service.

### [Brief Description of Drawings]

FIG. 1 is a block diagram of an electronic device in a network environment.
FIG. 2 is a block diagram illustrating an integrated intelligence system.
FIG. 3 is a diagram illustrating a form of relation information between concepts and actions stored in a database.
FIG. 4 is a diagram illustrating a user terminal that displays a screen for processing a received voice input through an intelligent application.
FIG. 5 is a configuration diagram of a voice assistant system.
FIG. 6 illustrates an architecture of the electronic device.
FIG. 7 illustrates an example in which an expression detection module detects a user-specific expression.
FIG. 8 illustrates an example in which the expression detection module detects a user's expression on a specific topic.
FIG. 9 shows an example of managing a user-specific expression database.
FIG. 10 is a structural diagram of a response generation module.
FIG. 11 illustrates an example of generating a response based on user's characteristics.
FIG. 12 illustrates an example of generating a response based on a user's situation according to the claimed solution.
FIG. 13 illustrates an example of generating a response based on user's characteristics.
FIG. 14 illustrates an example of generating a response based on the location of the user.
FIG. 15 illustrates an example of generating a response based on a specific topic and a user's expression according to the claimed solution.
FIG. 16 illustrates another example of generating a response based on a specific topic and a user's expression according to the claimed solution.
FIG. 17 is a flowchart for the electronic device to generate a response to a user's input. Among the above figures, the embodiment of part (b) of FIG. 11, FIG. 12, FIG. 15 and FIG 16 pertain to the claimed solution.

### [Mode for the Invention]

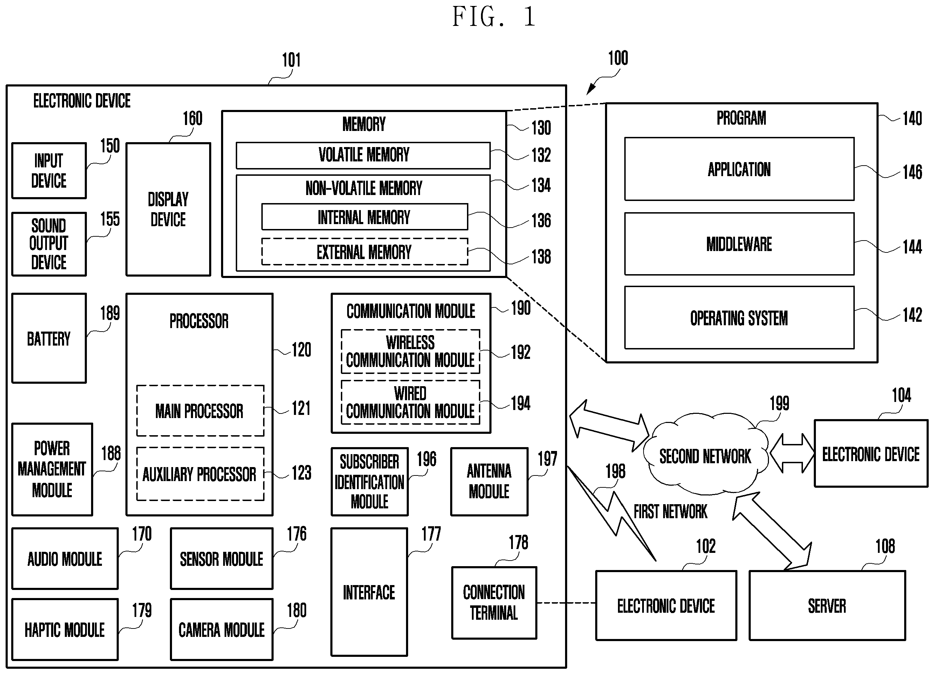

Fig. 1, which does not pertain to the claimed solution, is a block diagram illustrating an electronic device 101 in a network environment 100. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

The antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

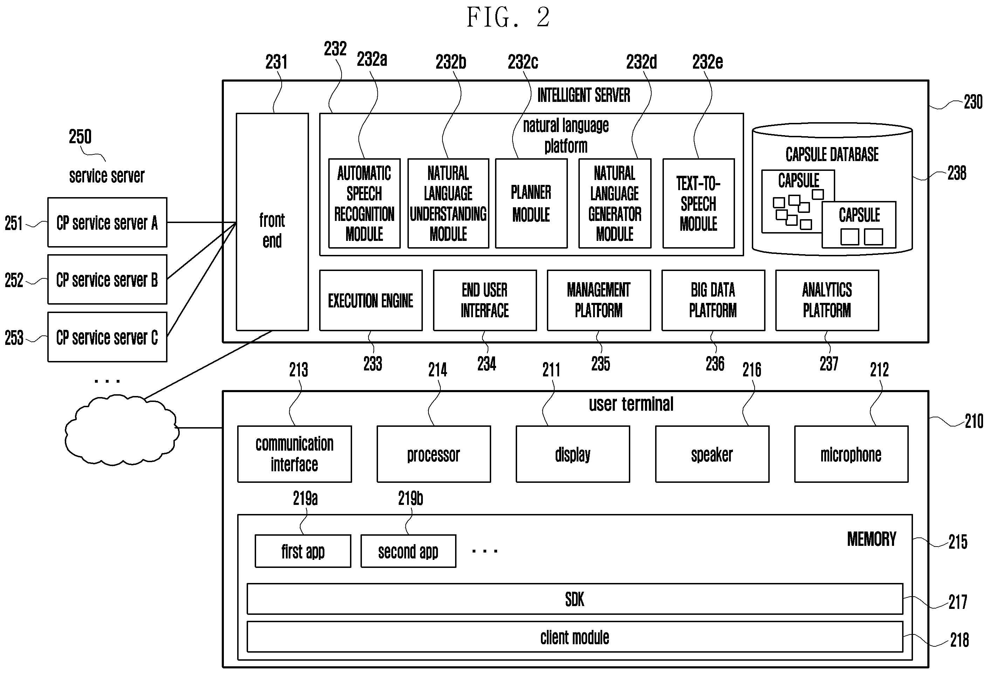

FIG. 2, which does not pertain to the claimed solution, is a block diagram illustrating an integrated intelligence system.

With reference to FIG. 2, the integrated intelligent system of an embodiment may include a user terminal 210, an intelligent server 230, and a service server 250.

The user terminal 210 of an embodiment may be a terminal device (or, electronic device) connectable to the Internet, and may be, for example, a mobile phone, a smartphone, a personal digital assistant (PDA), a notebook computer, a TV, a domestic appliance, a wearable device, a HMD, or a smart speaker.

According to the illustrated embodiment, the user terminal 210 may include a communication interface 213, a microphone 212, a speaker 216, a display 211, a memory 215, or a processor 214. The components listed above may be operably or electrically connected to each other. The user terminal 210 may include at least some of the configurations and/or functions of the electronic device 101 in FIG. 1.

The communication interface 213 of an embodiment may be configured to transmit and receive data by being connected to an external device. The microphone 212 of an embodiment may receive a sound (e.g., user's utterance) and convert it into an electrical signal. The speaker 216 of an embodiment may output an electrical signal as a sound (e.g., voice). The display 211 of an embodiment may be configured to display an image or video. The display 211 of an embodiment may also display a graphical user interface (GUI) of an application (or, application program) being executed.

The memory 215 of an embodiment may store a client module 218, a software development kit (SDK) 217, and a plurality of applications 219a and 219b. The client module 218 and the SDK 217 may constitute a framework (or, solution program) for performing general functions. In addition, the client module 218 or SDK 217 may constitute a framework for processing voice input.

The plural applications 219a and 219b of the memory 215 of an embodiment may be a program for performing a specified function. According to an embodiment, the plural apps may include a first application 219a and a second application 219b. According to an embodiment, the plural applications 219a and 219b may each include a plurality of operations for performing a specified function. For example, the applications 219a and 219b may include an alarm application, a message application, and/or a schedule application. According to an embodiment, the plural applications 219a and 219b may be executed by the processor 214 to sequentially execute at least some of the plurality of operations.

The processor 214 of an embodiment may control the overall operation of the user terminal 210. For example, the processor 214 may be electrically connected to the communication interface 213, the microphone 212, the speaker 216, and the display 211 to perform specified operations.

The processor 214 of an embodiment may also execute a program stored in the memory 215 to perform a designated function. For example, the processor 214 may execute at least one of the client module 218 or the SDK 217 to perform the following operations for processing a voice input. The processor 214 may control the operation of the plural applications 219a and 219b through, for example, the SDK 217. The following operations described as operations of the client module 218 or the SDK 217 may be operations caused by the execution of the processor 214.

The client module 218 of an embodiment may receive voice input. For example, the client module 218 may receive a voice signal corresponding to the user's utterance sensed through the microphone 212. The client module 218 may transmit the received voice input to the intelligent server 230. The client module 218 may transmit state information of the user terminal 210 to the intelligent server 230 together with the received voice input. The state information may be, for example, information about the execution state of an application.

The client module 218 of an embodiment may receive a result corresponding to the received voice input. For example, when the intelligent server 230 can produce a result corresponding to the received voice input, the client module 218 may receive the result corresponding to the received voice input. The client module 218 may display the received result on the display 211.

The client module 218 of an embodiment may receive a plan corresponding to a received voice input. The client module 218 may display a result obtained by executing a plurality of operations of an application according to the plan on the display 211. For example, the client module 218 may sequentially display execution results of a plurality of operations on the display 211. As another example, the user terminal 210 may display only a partial result of executing a plurality of operations (e.g., result of the last operation) on the display 211.

According to an embodiment, the client module 218 may receive a request from the intelligent server 230 to obtain information necessary to produce a result corresponding to a voice input. According to an embodiment, the client module 218 may transmit the necessary information to the intelligent server 230 in response to the request.

The client module 218 of an embodiment may transmit information about a result obtained by executing a plurality of operations according to the plan to the intelligent server 230. The intelligent server 230 may confirm that the received voice input has been correctly processed by using the result information.

The client module 218 of an embodiment may include a speech recognition module. According to an embodiment, the client module 218 may recognize a voice input for performing a limited function through the speech recognition module. For example, the client module 218 may execute an intelligent application for processing a voice input to perform systematic operations through a designated input (e.g., wake up!).

The intelligent server 230 of an embodiment may receive information related to a user's voice input from the user terminal 210 through a communication network. According to an embodiment, the intelligent server 230 may convert data related to the received voice input into text data. According to an embodiment, the intelligent server 230 may generate a plan for performing a task corresponding to the user's voice input based on the text data.

According to an embodiment, the plan may be generated by an artificial intelligent (AI) system. The artificial intelligence system may be a rule-based system, a neural network-based system (e.g., feedforward neural network (FNN)), a recurrent neural network (RNN). It may be a combination of these or another artificial intelligence system. According to an embodiment, the plan may be selected from a set of predefined plans, or may be generated in real time in response to a user request. For example, the artificial intelligence system may select at least one plan from among a plurality of predefined plans.

The intelligent server 230 of an embodiment may transmit a result according to a generated plan to the user terminal 210 or transmit a generated plan to the user terminal 210. According to an embodiment, the user terminal 210 may display a result according to the plan on the display 211. According to an embodiment, the user terminal 210 may display a result of executing operations according to the plan on the display 211.

The intelligent server 230 of an embodiment may include a front end 231, a natural language platform 232, a capsule database 238, an execution engine 233, an end user interface 234, a management platform 235, a big data platform 236, or an analytics platform 237.

The front end 231 according to an embodiment may receive a voice input from the user terminal 210. The front end 231 may transmit a response corresponding to the voice input.

According to an embodiment, the natural language platform 232 may include an automatic speech recognition module (ASR module) 232a, a natural language understanding module (NLU module) 232b, a planner module 232c, a natural language generator module (NLG module) 232d, or a text-to-speech module (TTS module) 232e.

The automatic speech recognition module 232a of an embodiment may convert a voice input received from the user terminal 210 into text data. The natural language understanding module 232b of an embodiment may identify the user's intention by using the text data of the voice input. For example, the natural language understanding module 232b may identify the user's intention by performing syntactic analysis or semantic analysis. The natural language understanding module 232b of an embodiment may identify the meaning of a word extracted from the voice input based on linguistic features (e.g., grammatical elements) of morphemes or phrases, and may determine the intention of the user by matching the meaning of the identified word with the intention.

The planner module 232c of an embodiment may generate a plan by using the intention and parameters determined by the natural language understanding module 232b. According to an embodiment, the planner module 232c may determine a plurality of domains required to perform the task based on the determined intention. The planner module 232c may determine a plurality of actions included in each of the plural domains determined based on the intention. According to an embodiment, the planner module 232c may determine parameters necessary to execute the determined plural actions or result values output by the execution of the plural actions. The parameter and the result value may be defined as a concept of a specified format (or, class). Consequently, the plan may include plural actions and plural concepts determined by the user's intention. The planner module 232c may determine the relationship between the plural actions and the plural concepts in stages (or, hierarchically). For example, the planner module 232c may determine the execution order of the plural actions determined based on the user's intention, based on the plural concepts. **In** other words, the planner module 232c may determine the execution order of the plural actions based on parameters required for execution of the plural actions and results output by the execution of the plural actions. Accordingly, the planner module 232c may generate a plan including association information (e.g., ontology) between plural actions and plural concepts. The planner module 232c may generate a plan by using information stored in a capsule database in which a set of relationships between concepts and actions is stored.

The natural language generator module 232d of an embodiment may convert specified information into a text form. The information in text form may be in the form of a natural language utterance. The text-to-speech module 232e of an embodiment may convert information in text form into information in speech form.

According to an embodiment, some or all of the functions of the natural language platform 232 may be implemented in the user terminal 210.

The capsule database may store information on relationships between plural concepts and actions corresponding to a plurality of domains. A capsule according to an embodiment may include plural action objects (or, action information) and concept objects (or, concept information) included in a plan. According to an embodiment, the capsule database may store a plurality of capsules in the form of a concept action network (CAN). According to an embodiment, a plurality of capsules may be stored in a function registry included in the capsule database.

The capsule database may include a strategy registry in which strategy information necessary for determining a plan corresponding to a voice input is stored. The strategy information may include reference information for determining one plan when there are plural plans corresponding to a voice input. According to an embodiment, the capsule database may include a follow-up registry in which information about a follow-up action for suggesting a follow-up action to the user in a specified situation is stored. The follow-up action may include, for example, a follow-up utterance. According to an embodiment, the capsule database may include a layout registry that stores layout information of information output through the user terminal 210. According to an embodiment, the capsule database may include a vocabulary registry in which vocabulary information included in the capsule information is stored. According to an embodiment, the capsule database may include a dialog registry in which information about a dialog (or, interaction) with the user is stored. The capsule database may update a stored object through a developer tool. The developer tool may include a function editor for updating, for example, an action object or a concept object. The developer tool may include a vocabulary editor for updating the vocabulary. The developer tool may include a strategy editor for creating and registering strategies for determining plans. The developer tool may include a dialog editor for creating a dialog with the user. The developer tool may include a follow-up editor that may activate a follow-up goal and edit a follow-up utterance that provides a hint. The follow-up goal may be determined based on a currently set goal, a user's preference, or an environmental condition. **In** one embodiment, the capsule database may be implemented in the user terminal 210.

The execution engine 233 of an embodiment may produce a result by using a generated plan. The end user interface 234 may transmit the produced result to the user terminal 210. Hence, the user terminal 210 may receive the result and provide the received result to the user. The management platform 235 of an embodiment may manage information used in the intelligent server 230. The big data platform 236 of an embodiment may collect user data. The analytics platform 237 of an embodiment may manage the quality of service (QoS) of the intelligent server 230. For example, the analytics platform 237 may manage the components and processing speed (or, efficiency) of the intelligent server 230.

The service server 250 of an embodiment may provide a specified service (e.g., food order or hotel reservation) to the user terminal 210. According to an embodiment, the service server 250 may be a server operated by a third party. The service server 250 of an embodiment may provide the intelligent server 230 with information for generating a plan corresponding to the received voice input. The provided information may be stored in the capsule database. In addition, the service server 250 may provide result information according to a plan to the intelligent server 230.

In the integrated intelligent system described above, the user terminal 210 may provide various intelligent services to the user in response to user inputs. The user input may include, for example, an input through a physical button, a touch input, or a voice input.

In one embodiment, the user terminal 210 may provide a speech recognition service through an intelligent application (or, speech recognition application) stored therein. **In** this case, for example, the user terminal 210 may recognize a user utterance or a voice input received through the microphone 212 and provide a service corresponding to the recognized voice input to the user.

In one embodiment, the user terminal 210 may perform a designated action alone or together with the intelligent server 230 and/or the service server 250 based on the received voice input. For example, the user terminal 210 may execute an application corresponding to the received voice input and perform a specified action through the executed application.

In one embodiment, when the user terminal 210 provides a service together with the intelligent server 230 and/or the service server 250, the user terminal 210 may detect a user's utterance by using the microphone 212 and generate a signal (or, voice data) corresponding to the detected user's utterance. The user terminal 210 may transmit the voice data to the intelligent server 230 through the communication interface 213.

As a response to the voice input received from the user terminal 210, the intelligent server 230 of an embodiment may generate a plan for performing a task corresponding to the voice input or a result of performing an action according to the plan. The plan may include, for example, a plurality of actions for performing a task corresponding to a user's voice input, and a plurality of concepts related to the plural actions. The concept may define parameters input to the execution of plural actions or result values output by the execution of plural actions. The plan may include association information between plural actions and plural concepts.

The user terminal 210 of an embodiment may receive the response through the communication interface 213. The user terminal 210 may output a voice signal generated inside the user terminal 210 to the outside by using the speaker 216, and may output an image generated inside the user terminal 210 to the outside by using the display 211.

FIG. 2 illustrates an example in which speech recognition of a voice input received from the user terminal 210, natural language understanding and generation, and production of a result using a plan are performed on the intelligent server 230, but various embodiments of the present document are not limited thereto. For example, at least some components of the intelligent server 230 (e.g., natural language platform 232, execution engine 233, and capsule database 238) may be embedded in the user terminal 210 (or, electronic device 101 in FIG. 1), and their operations may be performed by the user terminal 210.

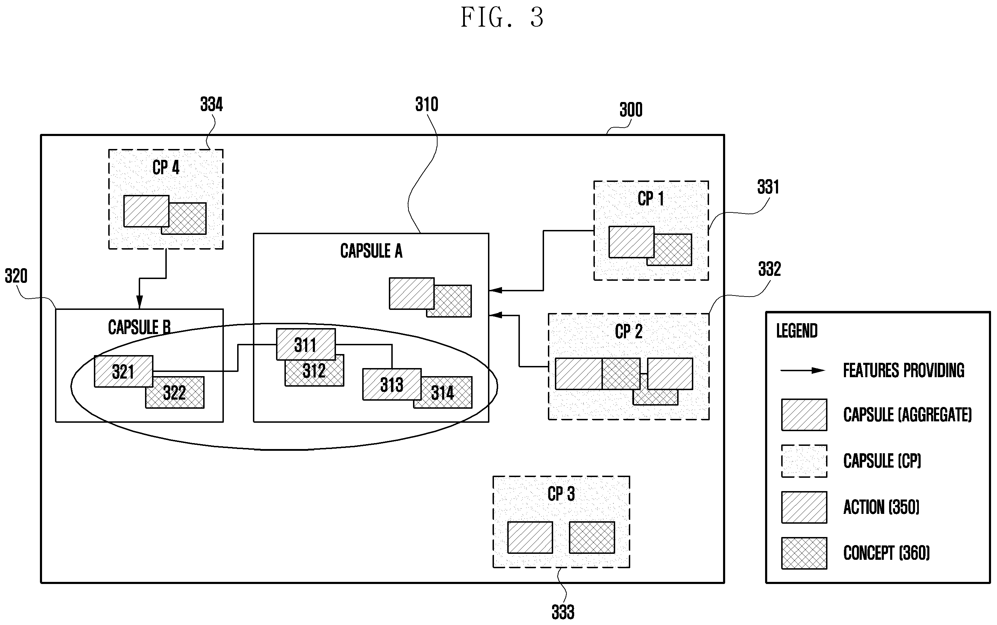

FIG. 3, which does not pertain to the claimed solution, is a diagram illustrating a form of relation information between concepts and actions stored in a database.

The capsule database (e.g., capsule database 238 in FIG. 2) of the intelligent server (e.g., intelligent server 230 in FIG. 2) may store the capsules in the form of a concept action network (CAN). The capsule database may store actions for processing a task corresponding to a user's voice input and parameters necessary for the actions in the form of a concept action network (CAN).

The capsule database may store plural capsules (capsule A (310), capsule B (320)) corresponding to each of plural domains (e.g., applications). According to an embodiment, one capsule (e.g., capsule A (310)) may correspond to one domain (e.g., location (geo), application). Also, at least one service provider (e.g., CP 1 (331) or CP 2 (331)) for performing a function for a domain related to the capsule may correspond to one capsule. According to an embodiment, one capsule may include at least one action 410 and at least one concept 420 for performing a specified function.

The natural language platform (e.g., natural language platform 232 in FIG. 2) may generate a plan for performing a task corresponding to the received voice input by using the capsules stored in the capsule database. For example, the planner module (e.g., planner module 232c in FIG. 2) of the natural language platform may generate a plan by using capsules stored in the capsule database. For example, actions 311 and 313 and concepts 312 and 314 of capsule A (310), and actions 321 and concepts 322 of capsule B (320) may be used to create a plan.

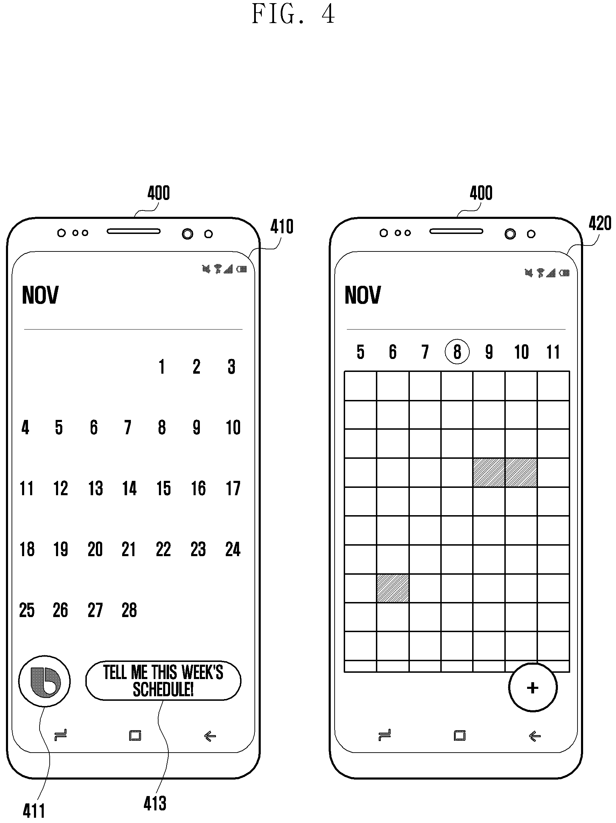

FIG. 4, which does not pertain to the claimed solution, is a diagram illustrating a user terminal that displays a screen for processing a received voice input through an intelligent application.

The user terminal 400 may execute an intelligent application to process a user input through the intelligent server (e.g., intelligent server 230 in FIG. 2).

According to an embodiment, upon recognizing a specified voice input (e.g., wake up!) or receiving an input through a hardware key (e.g., dedicated hardware key), the user terminal 400 may execute an intelligent application for processing a voice input. The user terminal 400 may execute the intelligent app in a state where, for example, a schedule application is running. According to an embodiment, the user terminal 400 may display an object (e.g., icon 411) corresponding to the intelligent application on the display 410. According to an embodiment, the user terminal 400 may receive a voice input by a user's utterance. For example, the user terminal 400 may receive a voice input "Tell me this week's schedule!". According to an embodiment, the user terminal 400 may display, on the display 410, a user interface (UI) (e.g., input field) of the intelligent application on which text data 413 of the received voice input is displayed.

According to an embodiment, the user terminal 400 may display a result corresponding to the received voice input on the display 420. For example, the user terminal 400 may receive a plan corresponding to the received user input, and display "this week's schedule" on the display 420 according to the plan.

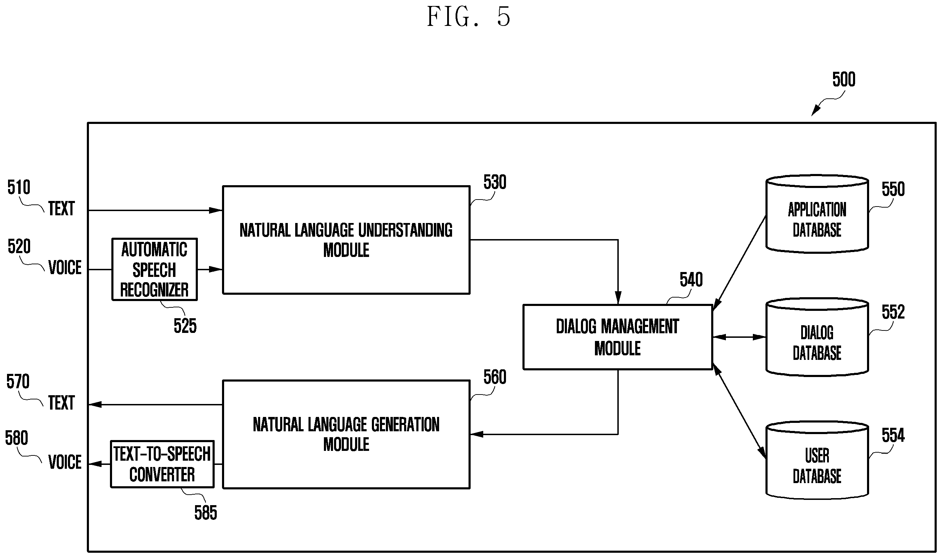

FIG. 5, which does not pertain to the claimed solution, is a composition diagram of a voice assistant system.

According to an embodiment, the voice assistant system 500 (e.g., electronic device 101 in FIG. 1) may be composed as an electronic device. The voice assistant system 500 may include a natural language understanding (NLU) module 530, a dialog management module 540, and a natural language generation (NLG) module 560. According to an embodiment, the voice assistant system 500 may further include an automatic speech recognizer (ASR) 525, a text-to-speech (TTS) converter 585, an application database 550, a dialog database 552, and a user database 554. According to an embodiment, at least some components of the voice assistant system 500 may be implemented with a processor.

According to an embodiment, the voice assistant system 500 may receive a text 510 or a voice 520 from the user. When the voice assistant system 500 receives a voice 520 from the user, it may convert the voice 520 into text by using the automatic speech recognizer 525.

According to an embodiment, the natural language understanding module 530 may perform syntactic analysis or semantic analysis on the text 510 received from the user or the text received from the automatic speech recognizer 525. The natural language understanding module 530 may infer the meaning of the received text through syntactic analysis, and may infer the actual intention of the received text through semantic analysis. For example, upon receiving "Play the latest song", the natural language understanding module 530 may infer that the intention of the text is music playback and the object is the latest song from "song" and "play".

According to an embodiment, the dialog management module 540 may store information inferred through the natural language understanding module 530 in the dialog database 552 and/or the user database 554. According to an embodiment, the dialog management module 540 may retrieve necessary information from the application database 550, the dialog database 552, and/or the user database 554 by using the information inferred through the natural language understanding module 530. According to an embodiment, the dialog management module 540 may search the dialog database 552 to extract a template to be used by the natural language generation module 560 as a response. For example, if the intention of a received text is music playback, the dialog management module 540 may search the application database 550 to extract an application related to music playback, and may search the dialog database 552 to extract a template that can be used as a response.

According to an embodiment, the natural language generation module 560 may generate a response by using a result obtained through the dialog management module 540. The natural language generation module 560 may generate a response by using a template. For example, the natural language generation module 560 may generate "I will play the latest song" in response to "Play the latest song". As another example, in response to "Text my mother 'I am leaving work now'", the natural language generation module 560 may generate "I sent a text message to your mother saying 'I am leaving work now'".

According to an embodiment, the response generated by the natural language generation module 560 may be displayed as text 570 by using the display, or may be converted into a voice 580 and output by using the text-to-speech converter 585.

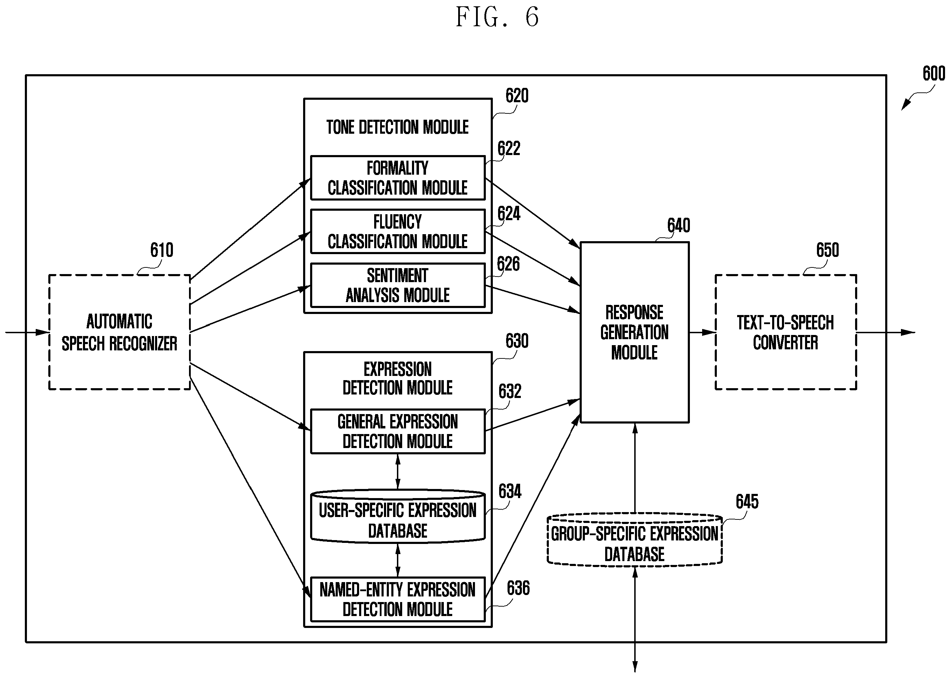

FIG. 6, which does not pertain to the claimed solution, illustrates an architecture of the electronic device.

With reference to FIG. 6, the electronic device 600 (e.g., voice assistant system 500 in FIG. 5) may include a tone detection module 620, an expression detection module 630, and a response generation module 640. The electronic device 600 may further include an automatic speech recognizer 610 (e.g., automatic speech recognizer 525 in FIG. 5), a text-to-speech converter 650 (e.g., text-to-speech converter 565 in FIG. 5), and/or a group-specific expression database 645.

When a voice is received, the electronic device 600 may convert it into text by using the automatic speech recognizer 610.

The tone detection module 620 may store a natural language processing result such as domain, intention, and object for the received voice or text, a context such as received time and place, and/or user information. The tone detection module 620 may infer or detect the user's explicit intention and implicit intention contained in the received voice or text by using the stored information.

The tone detection module 620 may detect a tone by using a pattern of a voice or text received from the user. Specifically, the tone detection module 620 may determine or detect the formality, fluency, and sentiment based on the tone. The tone detection module 620 may include a formality classification module 622, a fluency classification module 624, and a sentiment analysis module 626.

The formality classification module 622 may infer the degree of formality through the expression used in the received or converted text and display it as a value. The degree of formality may indicate whether the text or voice was received in a public setting or in a private setting. For example, the value output by the formality classification module 622 may be one of 1 to 5. The formality classification module 622 may infer the degree of formality by using at least one of, for example, the form of the sentence-closing ending, the usage frequency of words containing Chinese characters, or the conciseness and clarity of the sentence. According to an embodiment, the value of the formal classification module 622 may be determined through learning on a collated corpus. The formality classification module 622 may determine how formal the received or converted text is by performing contrastive learning on a corpus that records, for example, speaker's verbal expressions in newspapers or news, or conversations between friends. Thereafter, the response generation module 640 may infer a situation based on the value of the formality classification module 622 to generate a response suitable for the situation.

The fluency classification module 624 may evaluate the level of fluency of the received or converted text as to the current language and/or the level of familiarity with the subject matter of the contents included in the received or converted text, and display it as a value. For example, the value output by the fluency classification module 624 may be one of 1 to 5. Even if a text or voice is in the language of the user in daily life, the level of familiarity with a specific field (subject) may vary depending on the user. The electronic device 600 may determine the degree of fluency to generate a response in consideration of the user's understanding of a specific field (subject). For example, if the user is an adult or a child, the degree of fluency may be different even in the same subject. As another example, when the subject is a particular disease, even if the users are all adults, the degree of fluency of a doctor and an ordinary person on the particular subject may be different. Thereafter, the response generation module 640 may select a word, term, or expression to be used in the response based on the value of the fluency classification module 624.

The sentiment analysis module 626 may display a result of inferring the user's psychological state by using the expression included in the received or converted text. The sentiment analysis module 626 may infer the user's subjective impression, emotion, attitude, and opinion on the subject of the contents included in the received or converted text, and analogize and display the emotional state such as joy, anger, sadness, and urgency. For example, if the user's mood is inferred to be relaxed and good from the received voice, the electronic device 600 may provide various pieces of information along with a basic response to the subject of the contents included in the received or converted text. As another example, if anger or urgency is inferred from the received or converted text, the electronic device 600 may provide only a basic response to the subject of the contents included in the received or converted text.

The tone detection module 620 may combine the results of the formality classification module 622, the fluency classification module 624, and the sentiment analysis module 626 to generate a comprehensive attribute (e.g., tone, manner) of the response to be generated by the response generation module 640. The tone detection module 620 may transfer the determined result to the response generation module 640. Alternatively, the tone detection module 620 may transfer the individual results of the formality classification module 622, the fluency classification module 624, and the sentiment analysis module 626 to the response generation module 640.

The expression detection module 630 may identify and detect a user-specific expression (or, tone or narration) and an expression for a specific topic (or, contents) from the received or converted text. User-specific expressions can be built through the growth process and experience of each user. For example, use of a dialect, a sentence ending form, and a habitually used flowery word may correspond to a user-specific expression. An expression on a specific topic is an expression that is expressed only during a conversation on a specific topic or group that is not detected in the flow of normal conversations, and terms, abbreviations, and buzzwords commonly used in a community dealing with the topic may correspond to expressions on a particular topic. For example, their own terms used among fan clubs or expressions that are popular in a specific Internet community may be included in the expression on a specific topic. Because normal expressions and expressions in a specific situation may differ even for a single user, to detect a user-specific expression, the expressions used may be stored for each topic and situation; and the expression detection module 630 may detect a user's expression by learning which expression is used in which situation, and which term is used to refer to a specific topic through a comparison with a general corpus. The user's expression detected through learning in this way may enable the electronic device 600 to provide a service that the user can feel familiar with.

The expression detection module 630 may include a general expression detection module 632, a user-specific expression database 634, and a named-entity expression detection module 636.

The general expression detection module 632 may store and detect a user-specific general expression in the received voice or text. The general expression detection module 632 may store a user-specific general expression in the user-specific expression database 634 for each user, and detect it from the user-specific expression database 634. A general expression may be an expression, such as a verb, an adjective, or an exclamation, excluding an entity. An example of a user-specific general expression may be 'sming' (short for streaming), which corresponds to 'playing music'.

The named-entity expression detection module 636 may store and detect a user-specific named-entity expression in the received voice or text. The named-entity expression detection module 636 may store a user-specific named-entity expression in the user-specific expression database 634 for each user, and detect it from the user-specific expression database 634. An example of a user-specific named-entity expression may be a user's pet name for a specific person.

The user-specific expression database 634 may be segmented for each user. The user-specific expression database 634 may store user-specific general expressions and user-specific named-entity expressions. User-specific general expressions and user-specific named-entity expressions may be stored together with information about the domain, topic, situation, content, and counterpart. In addition, priorities can be further stored.

Expressions used in a community that the user has subscribed to or frequently accesses may be stored in the group-specific expression database 645. For example, if there is a history of a user accessing a cat community, and cat-related expressions such as "~ ha-nyang", "nyang-nim (dear cat)", "servant", and "~ong (meow)" are frequently detected in the community, those frequently detected expressions may be stored in the group-specific expression database 645.

The response generation module 640 may generate a response to the received voice or text by using the result of the tone detection module 620 and the result of the expression detection module 630. The response generation module 640 may generate a response by using a user-specific general expression and a user-specific named-entity expression. According to an embodiment, the response generation module 640 may generate a response by further using an expression stored in the group-specific expression database 645. The response generation module 640 may generate different responses according to the domain, topic, situation, content, and counterpart. For example, when the user inputs "send a text 'hello'", the response generation module 640 may generate 'hi' if the counterpart is a friend, but may generate 'hello' if the counterpart is a boss.

The electronic device 600 may use the text-to-speech converter 650 to output the generated response as a voice. The electronic device 600 may display the generated response as text by using the display or may output the generated response as a voice by using the speaker.

Next, a detailed description will be given of specific operations or various examples of some modules of the electronic device 600.

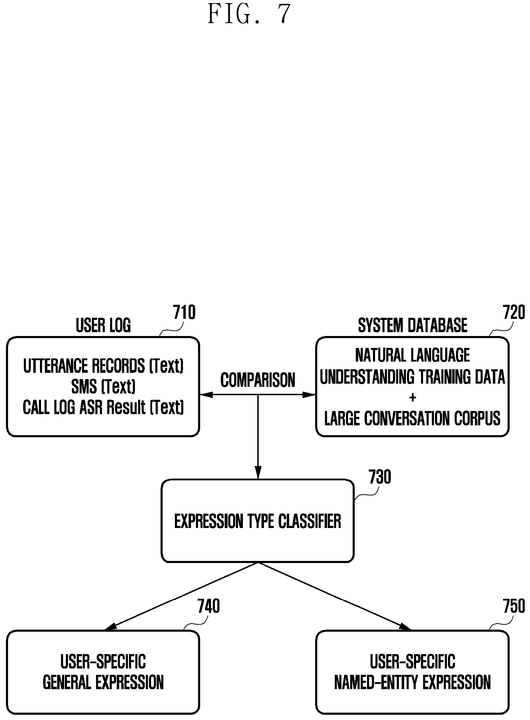

FIG. 7, which does not pertain to the claimed solution, illustrates an example in which the expression detection module detects a user-specific expression.

The expression detection module 630 may use a user log 710 of the electronic device to detect a user-specific expression. The user log 710 may include utterance records, short message service (SMS) results, and/or call log automatic send/receive (ASR) results. The expression detection module 630 may compare the user log 710 with expressions stored in a system database 720 to detect a user-specific expression in the user log 710. The system database 720 may store natural language understanding training data (NLU training data) and/or a large conversation corpus. The expression detection module 630 may use an expression type classifier 730 to classify the user-specific expression detected in the user log 710 into a user-specific general expression 740 and a user-specific named-entity expression 750.

The expression detection module 630 may store the classified user-specific general expression 740 and user-specific named-entity expression 750 in a user database for each user (e.g., user-specific expression database 634 in FIG. 6).

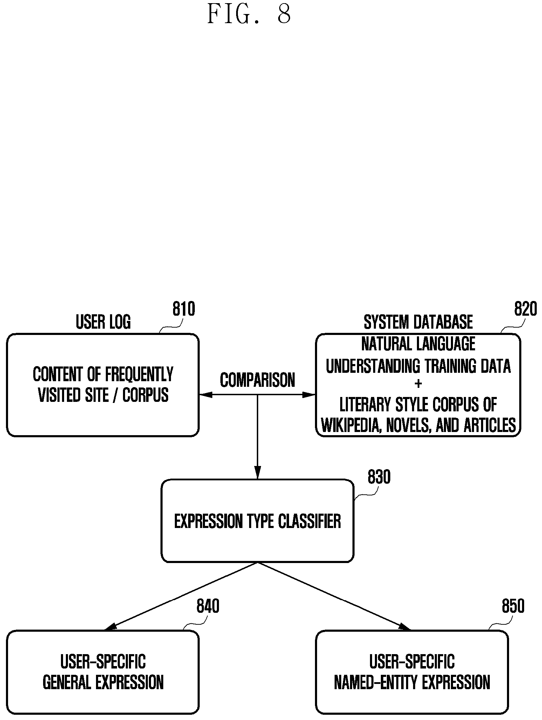

FIG. 8, which does not pertain to the claimed solution, illustrates an example in which the expression detection module detects a user's expression on a specific topic.

The expression detection module 630 may use a user log 810 of the electronic device to detect a user's expression on a specific topic. The user log 810 may include content and/or corpus of a frequently visited site or community. The expression detection module 630 may compare the user log 810 with expressions stored in the system database 820 to detect a user's expression on a specific topic in the user log 810. The system database 820 (e.g., system database 720 in FIG. 7) may store natural language understanding training data (NLU training data) and/or a literary style corpus of Wikipedia, novels, and articles. The expression detection module 630 may use an expression type classifier 830 (e.g., expression type classifier 730 in FIG. 7) to classify the user's expression on a specific topic detected in the user log 810 into a user-specific general expression 840 and a user-specific named-entity expression 850.

The expression detection module 630 may also detect an expression that is not directly used by the user. For example, when a community that the user has subscribed to or frequently accesses is detected in the user log 810, the expression detection module 630 may detect expressions frequently used in the corresponding community (e.g., "~ ha-nyang", "nyang-nim (dear cat)", "servant", "~ong (meow)"). The expression detection module 630 may use the expression type classifier 830 to classify an expression frequently used in a specific community detected in the user log 810 into a user-specific general expression 840, a user-specific named-entity expression 850, or other.

The expression detection module 630 may store the classified user-specific general expression 840 and user-specific named-entity expression 850 in a user database for each user (e.g., user-specific expression database 634 in FIG. 6). According to an embodiment, the expression detection module 630 may separately store an expression directly used by the user and an expression not directly used by the user.

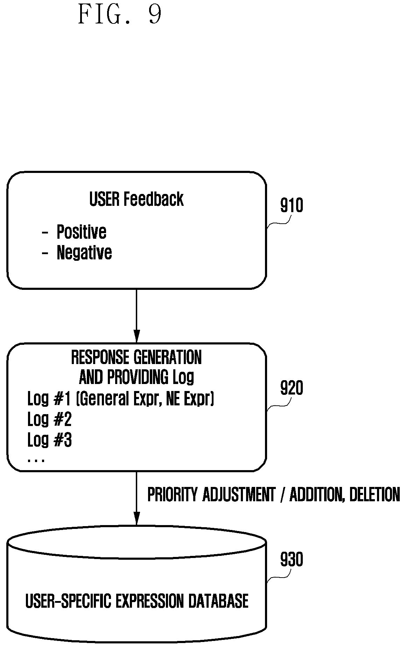

FIG. 9, which does not pertain to the claimed solution, shows an example of managing a user-specific expression database.

The expression detection module (e.g., expression detection module 630 in FIG. 6) may store a user-specific expression and a user's expression on a specific topic in the user-specific expression database 930 (e.g., user-specific expression database 634 in FIG. 6) by using the method described with reference to FIGS. 7 and 8.

The response generation module (e.g., response generation module 640 in FIG. 6) may generate a response by using an expression extracted from the user-specific expression database 930. The user may provide positive or negative feedback 910 for the generated response. The generated response may be stored in the log 920 together with the user's feedback.

The priorities of a user-specific expression and user's expression on a specific topic stored in the user-specific expression database 930 may be adjusted based on the log 920.

The user-specific expression and user's expression on a specific topic whose priority is adjusted can improve the quality of a response to be generated later, thereby increasing user satisfaction.

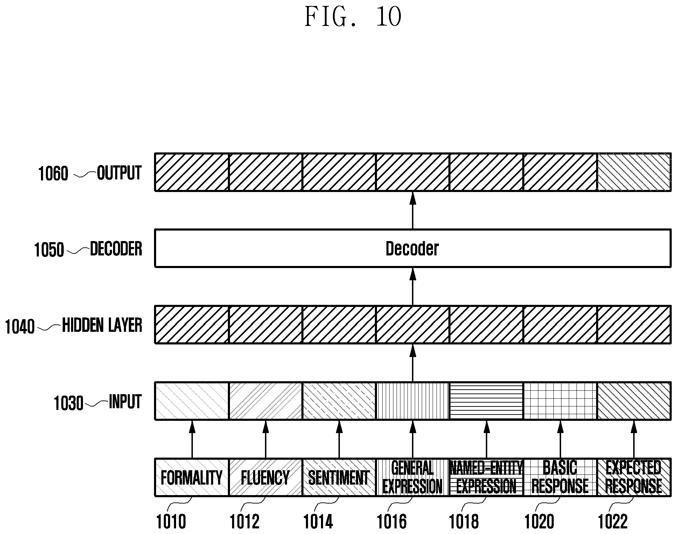

FIG. 10, which does not pertain to the claimed solution, is a configuration diagram of a deep learning module for generating a response.

The response generation module (e.g., response generation module 640 in FIG. 6) may find a desired response template based on standardized values detected through a natural language processing process of input text or voice to generate a response.

The response generating module 640 may generate a response by using a deep learning module trained through corpus records composed of pairs of input text or voice and response. The response generation module 640 may include a deep learning module.

The deep learning module may additionally receive user characteristics in addition to the generated response and convert it into a response suitable for the user's current situation. The user characteristics may be values output from the tone detection module (e.g., tone detection module 620 in FIG. 6) and/or the expression detection module (e.g., expression detection module 630 in FIG. 6). For example, the deep learning module may receive as input at least one of formality 1010, fluency 1012, sentiment 1014, general expression 1016, named-entity expression 1018, basic response 1020, or expected response 1022.

In the deep learning module, at least one of formality 1010, fluency 1012, sentiment 1014, general expression 1016, named-entity expression 1018, basic response 1020, or expected response 1022 received by the input 1030 may be sent to the hidden layer 1040, from the hidden layer 1040 to the decoder 1050, and from the decoder 1050 to the output 1060.

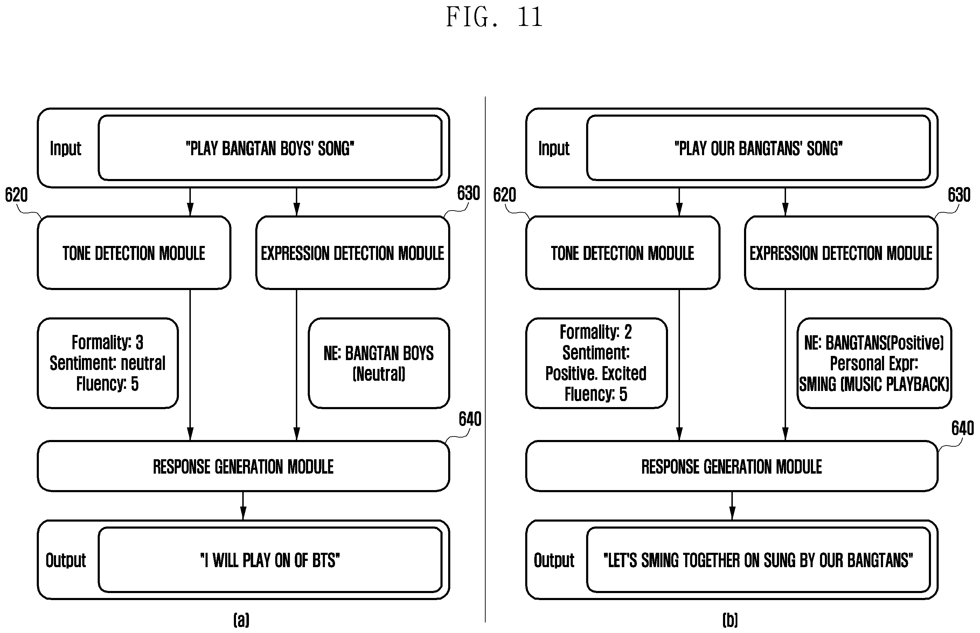

FIG. 11 illustrates an example of generating a response based on user's characteristics.

In FIG. 11, the user characteristic may be a preference of the user. With reference to part (a) of FIG. 11, which does not pertain to the claimed solution, the user may input "play Bangtan Boys' song" to the electronic device (e.g., electronic device 600 in FIG. 6) by voice or text. The tone detection module (e.g., tone detection module 620 in FIG. 6) may determine from the input voice or text that the formality is 3, the sentiment is neutral, and the fluency is 5, and the expression detection module (e.g., expression detection module 630 in FIG. 6) may detect Bangtan Boys as a named-entity expression. Then, the response generation module (e.g., response generation module 640 in FIG. 6) may output "I will play ON of BTS" based on the determined formality, sentiment, and fluency, and the detected named-entity expression.

With reference to part (b) of FIG. 11, according to the claimed solution, the user may input "play our Bangtans' song" to the electronic device 600 by voice or text. The tone detection module 620 determines from the input voice or text that the formality is 2, the sentiment is positive and excited, and the fluency is 5, and the expression detection module 630 detects Bangtan Boys as a named-entity expression. According to an embodiment, the expression detection module 630 extracts "sming" from the user-specific expression database (e.g., user-specific expression database 634 in FIG. 6) as an expression of the user characteristic for music playback. Then, the response generating module 640 outputs "Let's sming together ON sung by our Bangtans" based on the determined formality, sentiment, fluency, and the detected named-entity expression and user characteristic expression.

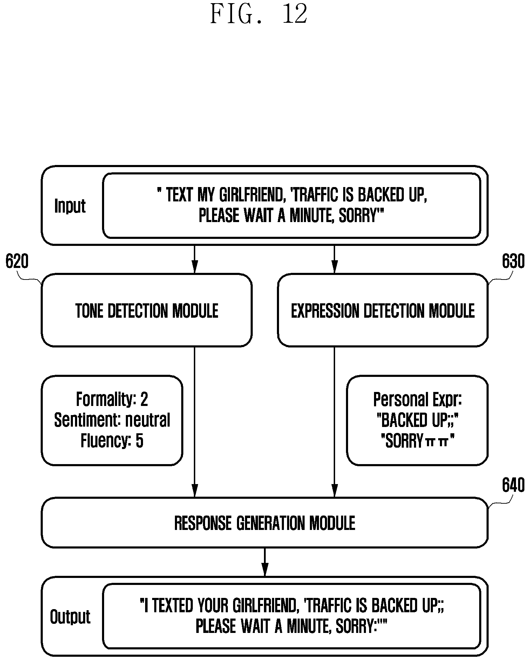

FIG. 12 illustrates an example of generating a response based on a user's situation according to the claimed solution.

With reference to FIG. 12, the user may input "text my girlfriend, 'traffic is backed up, please wait a minute, sorry'" by voice or text to the electronic device (e.g., electronic device 600 in FIG. 6). The tone detection module (e.g., tone detection module 620 in FIG. 6) determines from the input voice or text that formality is 2, the sentiment is neutral, and the fluency is 5, and the expression detection module 630 extracts "backed up;;" and "sorry:'" from the user-specific expression database (e.g., user-specific expression database 634 in FIG. 6) as an expression for the user's situation. Then, the response generation module (e.g., response generation module 640 in FIG. 6) outputs "I texted your girlfriend, 'traffic is backed up;; please wait a minute, sorry:"" based on the determined formality, sentiment, fluency, and expression for the user's situation.

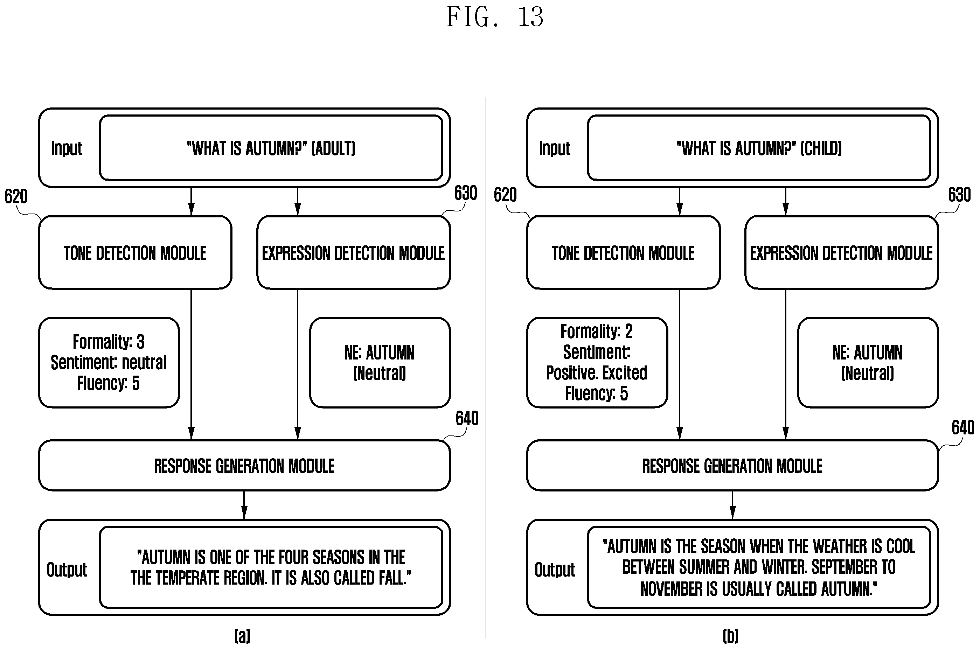

FIG. 13, which does not pertain to the claimed solution, illustrates an example of generating a response based on user's characteristics.

In FIG. 13, the user characteristic may be the language proficiency of a user. For example, the language proficiency of an adult may differ from that of a child.

With reference to part (a) of FIG. 13, an adult user may input "What is autumn?" to the electronic device (e.g., electronic device 600 in FIG. 6) by voice or text. The tone detection module (e.g., tone detection module 620 in FIG. 6) may determine from the input voice or text that the formality is 3, the sentiment is neutral, and the fluency is 5, and the expression detection module (e.g., expression detection module 630 in FIG. 6) may detect autumn as a named-entity expression. Then, the response generation module (e.g., response generation module 640 in FIG. 6) may output "Autumn is one of the four seasons in the temperate region. It is also called fall." based on the determined formality, sentiment, and fluency, and the detected named-entity expression.

With reference to part (b) of FIG. 13, a child user may input "What is autumn?" to the electronic device 600 by voice or text. The tone detection module may determine from the input voice or text that the formality is 2, the sentiment is positive and excited, and the fluency is 5, and the expression detection module 630 may detect autumn as a named-entity expression. Then, the response generation module 640 may output "Autumn is the season when the weather is cool between summer and winter. September to November is usually called autumn." based on the determined formality, sentiment, and fluency, and the detected named-entity expression.

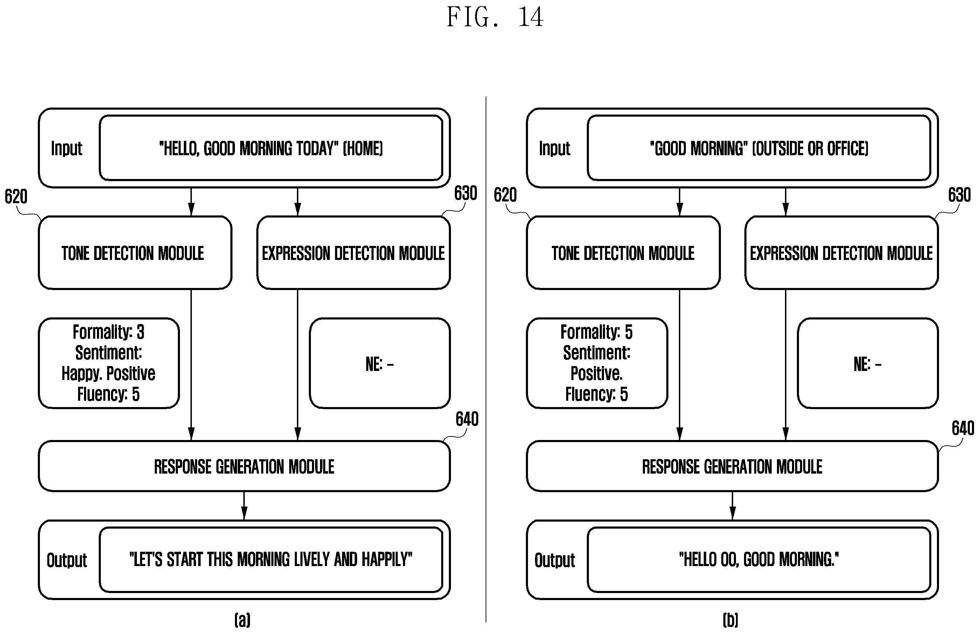

FIG. 14, which does not pertain to the claimed solution, illustrates an example of generating a response based on the location of the user.

Part (a) of FIG. 14 shows an example of using the electronic device (e.g., electronic device 600 in FIG. 6) at home, and part (b) of FIG. 14 shows an example of using the electronic device 600 in the outside or office.

With reference to part (a) of FIG. 14, the user may input "Hello, good morning today" to the electronic device 600 by voice or text. The tone detection module (e.g., tone detection module 620 in FIG. 6) may determine from the input voice or text that the formality is 3, the sentiment is happy and positive, and the fluency is 5, and the expression detection module (e.g., expression detection module 630 in FIG. 6) may detect nothing. Then, the response generation module (e.g., response generation module 640 in FIG. 6) may output "Let's start this morning lively and happily" based on the determined formality, sentiment, and fluency.

With reference to part (b) of FIG. 14, the user may input "Good morning" to the electronic device 600 by voice or text. The tone detection module 620 may determine from the input voice or text that the formality is 5, the sentiment is positive, and the fluency is 5, and the expression detection module 630 may detect nothing. Then, the response generation module 640 may output "Hello OO, good morning." based on the determined formality, sentiment, and fluency.

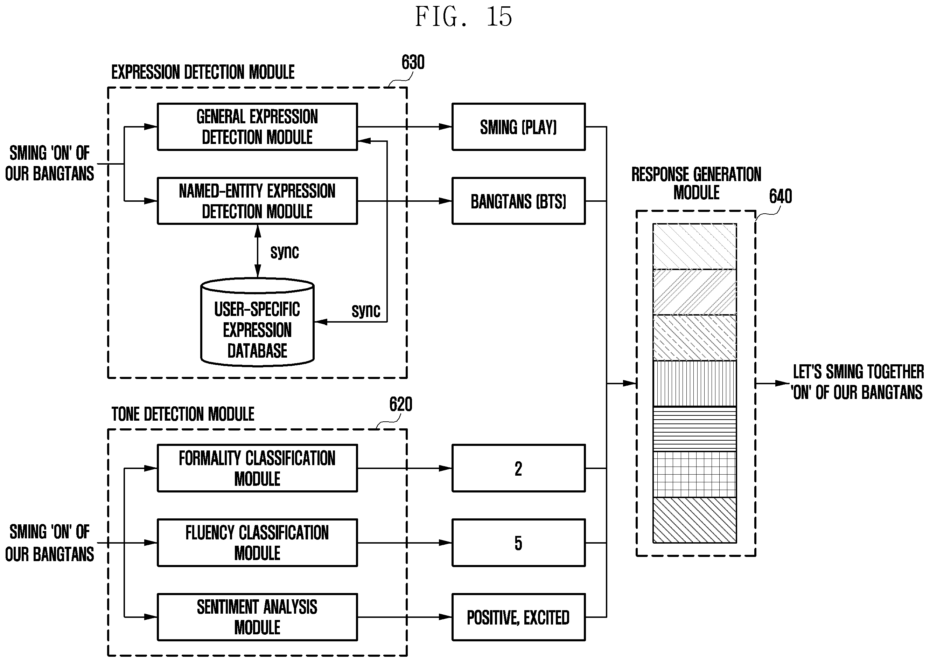

FIG. 15 illustrates an example of generating a response based on a specific topic and a user's expression according to the claimed solution.

With reference to FIG. 15, the user may input "Sming 'ON' of our Bangtans" to the electronic device (e.g., electronic device 600 in FIG. 6) by voice or text. The voice or text input by the user is input to the tone detection module (e.g., tone detection module 620 in FIG. 6) and the expression detection module (e.g., expression detection module 630 in FIG. 6).

According to an embodiment, the general expression detection module (e.g., general expression detection module 632 in FIG. 6) of the expression detection module 630 searches the user-specific expression database (e.g., user-specific expression database 634 in FIG. 6) to detect "Sming" as a user's general expression, and the named-entity expression detection module (e.g., named-entity expression detection module 636 in FIG. 6) of the expression detection module 630 searches the user-specific expression database 634 to detect "Bangtans" as a named-entity expression.

According to an embodiment, the formality classification module (e.g., formality classification module 622 in FIG. 6) of the tone detection module 620 infers the degree of formality of an expression used in the input voice or text. The formality classification module 622 determines the formality of "Sming 'ON' of our Bangtans" to be 2, for example.

According to an embodiment, the fluency classification module (e.g., fluency classification module 624 in FIG. 6) of the tone detection module 620 determines the level of fluency of the input voice or text and/or the level of familiarity with the topic included in the input voice or text. The fluency classification module 624 determines the fluency of "Sming 'ON' of our Bangtans" to be 5, for example.

According to an embodiment, the sentiment analysis module (e.g., sentiment analysis module 626 in FIG. 6) of the tone detection module 620 displays the result of inferring the user's psychological state by using the expression included in the input voice or text. The sentiment analysis module 626 determines the sentiment of "Sming 'ON' of our Bangtans" to be positive and excited, for example.

According to an embodiment, the response generation module (e.g., response generation module 640 in FIG. 6) generates a response based on the result of the tone detection module 620 and the result of the expression detection module 630. For example, in reply to "Sming 'ON' of our Bangtans", the response generation module 640 generates "Let's sming together 'ON' of our Bangtans".

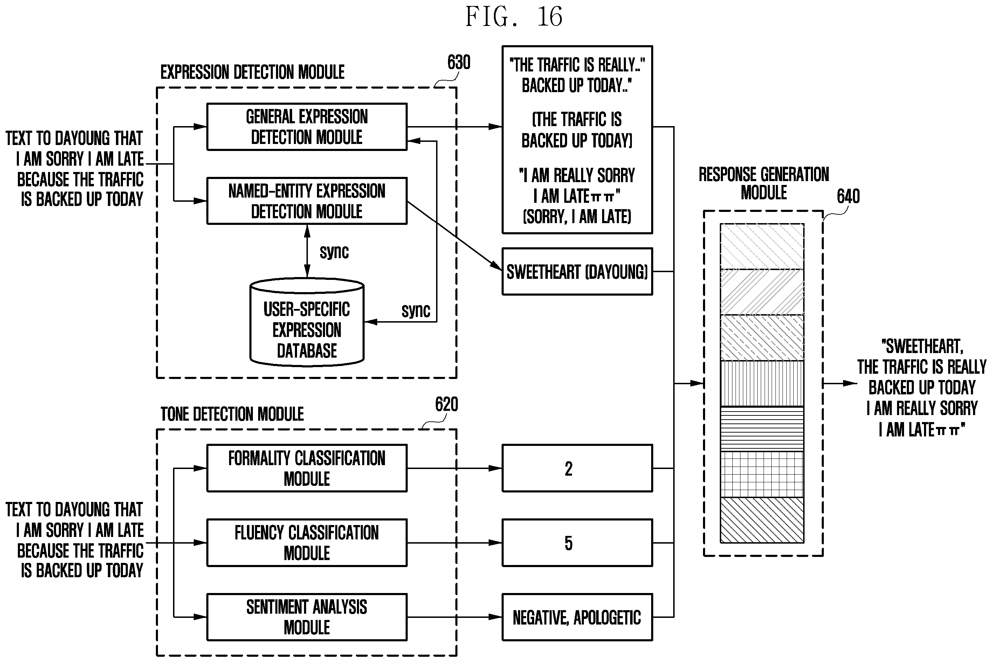

FIG. 16 illustrates another example of generating a response based on a specific topic and a user's expression according to the claimed solution.

With reference to FIG. 16, the user may input "text to Dayoung that I am sorry I am late because the traffic is backed up today" by voice or text to the electronic device (e.g., electronic device 600 of FIG. 6). The voice or text input by the user is input to the tone detection module (e.g., tone detection module 620 in FIG. 6) and the expression detection module (e.g., expression detection module 630 in FIG. 6).

According to an embodiment, the general expression detection module (e.g., general expression detection module 632 in FIG. 6) of the expression detection module 630 searches the user-specific expression database (e.g., user-specific expression database 634 in FIG. 6) to detect "the traffic is really backed up today" as a user's general expression for "the traffic is backed up today", and to detect "I am really sorry I am late:"' as a user's general expression for "I am sorry I am late". According to an embodiment, the named-entity expression detection module (e.g., named-entity expression detection module 636 in FIG. 6) of the expression detection module 630 searches the user-specific expression database 634 to detect "sweetheart" as a named-entity expression for "Dayoung".

According to an embodiment, the formality classification module (e.g., formality classification module 622 in FIG. 6) of the tone detection module 620 infers the degree of formality of an expression used in the input voice or text. The formality classification module 622 determines the formality of "text to Dayoung that I am sorry I am late because the traffic is backed up today" to be 2, for example.

According to an embodiment, the fluency classification module (e.g., fluency classification module 624 in FIG. 6) of the tone detection module 620 determines the level of fluency of the input voice or text and/or the level of familiarity with the topic included in the input voice or text. The fluency classification module 624 determines the fluency of "text to Dayoung that I am sorry I am late because the traffic is backed up today" to be 5, for example.

According to an embodiment, the sentiment analysis module (e.g., sentiment analysis module 626 in FIG. 6) of the tone detection module 620 displays the result of inferring the user's psychological state by using the expression included in the input voice or text. The sentiment analysis module 626 determines the sentiment of "text to Dayoung that I am sorry I am late because the traffic is backed up today" to be negative and apologetic, for example.

According to an embodiment, the response generation module (e.g., response generation module 640 in FIG. 6) generates a response based on the result of the tone detection module 620 and the result of the expression detection module 630. For example, in reply to "text to Dayoung that I am sorry I am late because the traffic is backed up today", the response generation module 640 generates "Sweetheart, the traffic is really backed up today... I am really sorry I am late:"'.

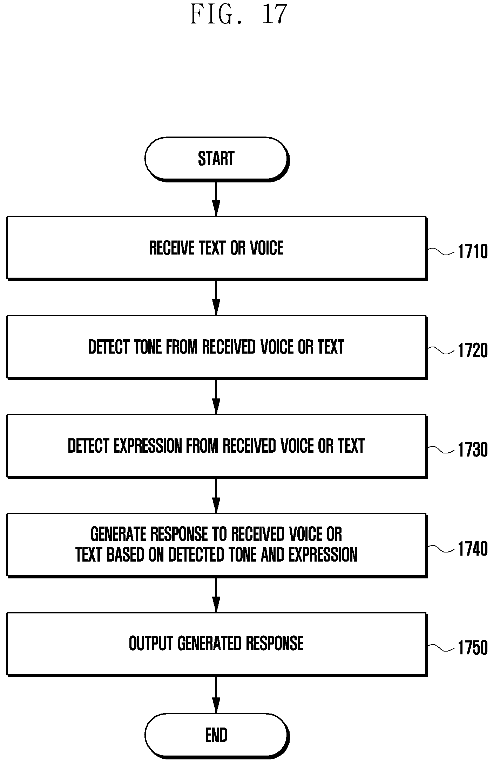

FIG. 17, which does not pertain to the claimed solution, is a flowchart for the electronic device to generate a response to a user's input.

At operation 1710, the electronic device (e.g., electronic device 600 in FIG. 6) may receive a text or voice from the user. The electronic device 600 may receive a voice by using the microphone or receive a text by using the display. When a voice is received, the electronic device 600 may convert it into text.

At operation 1720, the electronic device 600 may detect a tone from the received voice or text. The electronic device 600 may classify and/or analyze formality, fluency, and sentiment from the detected tone. For example, the electronic device 600 may classify the formality and fluency into levels and analyze the sentiment.

At operation 1730, the electronic device 600 may detect a user-specific expression from the received voice or text. User-specific expressions may include a general expression and a named-entity expression. The electronic device 600 may store a user-specific expression in a database assigned for each user. The electronic device 600 may obtain a user-specific expression by using the user log and store it in the database. The electronic device 600 may detect a user-specific expression from the received voice or text by using user-specific expressions stored in the database. The user log may include at least one of a text message log, a call log, or content of a site frequently visited by the user using the electronic device 600. When content of a site frequently visited by the user is used, the topic of the site may be further detected.

The electronic device 600 may also identify the time or place at which the text or voice is received. The electronic device 600 may further determine whether there is a counterpart of the received text or voice.

At operation 1740, the electronic device 600 may generate a response to the received voice or text based on the detected tone and expression.

At operation 1750, the electronic device 600 may output the generated response. The electronic device 600 may output the generated response as a voice by using the speaker or as text by using the display.

An electronic device may include: a memory; and a processor operably connected to the memory, wherein the processor may be configured to: receive a text or voice; detect a tone from the received voice or text; detect a user-specific expression from the received voice or text; generate a response to the received voice or text based on the detected tone and user-specific expression; and output the generated response as text or voice.

The processor of the electronic device according to the disclosure may be configured to determine the degree of formality from the detected tone, and generate a response in further consideration of the determined degree of formality.

The processor of the electronic device according to the disclosure may be configured to determine the degree of fluency from the detected tone, and generate a response in further consideration of the determined degree of fluency.

The processor of the electronic device according to the disclosure may be configured to determine the degree of sentiment from the detected tone, and generate a response in further consideration of the determined degree of sentiment.

The processor of the electronic device according to the disclosure may be further configured to determine whether there is a user-specific general expression from the detected expression, and determine whether there is a user-specific named-entity expression from the detected expression.

The processor of the electronic device according to the disclosure may be configured to detect a user-specific expression by using a user log.

In the electronic device according to the disclosure, the user log may include at least one of a text message log, a call log, or content of a site frequently visited by the user.

The processor of the electronic device according to the disclosure may be configured to detect a user-specific expression by using the content of the site frequently visited by the user, and further detect a topic of the site.

The processor of the electronic device according to the disclosure may be configured to identify the time or place at which the text or voice is received, and generate a response in further consideration of the identified time or place.

The processor of the electronic device according to the disclosure may be configured to determine whether there is a counterpart of the received voice or text, and generate a response in further consideration of the determined counterpart.

According to the disclosure, an operation method of an electronic device may include: receiving a text or voice; detecting a tone from the received voice or text; detecting a user-specific expression from the received voice or text; generating a response to the received voice or text based on the detected tone and user-specific expression; and outputting the generated response as text or voice.

According to the disclosure, the operation method of the electronic device may further include determining the degree of formality from the detected tone, and generating a response to the received voice or text may be generating the response in further consideration of the determined degree of formality.

According to the disclosure, the operation method of the electronic device may further include determining the degree of fluency from the detected tone, and generating a response to the received voice or text may be generating the response in further consideration of the determined degree of fluency.

According to disclosure, the operation method of the electronic device may further include determining the degree of sentiment from the detected tone, and generating a response to the received voice or text may be generating the response in further consideration of the determined degree of sentiment.

According to the disclosure, in the operation method of the electronic device, detecting a user-specific expression may further include: determining whether there is a user-specific general expression from the detected expression; and determining whether there is a user-specific named-entity expression from the detected expression.

According to the disclosure, in the operation method of the electronic device, detecting a user-specific expression may be detecting a user-specific expression by using a user log.

According to the disclosure, in the operation method of the electronic device, the user log may include at least one of a text message log, a call log, or content of a site frequently visited by the user.

According to the disclosure, in the operation method of the electronic device, detecting a user-specific expression by using content of a site frequently visited by the user may include further detecting a topic of the site.

According to the disclosure, the operation method of the electronic device may further include identifying the time or place at which the text or voice is received, and generating a response to the received voice or text may be generating the response in further consideration of the identified time or place.

According to the disclosure, in the operation method of the electronic device, detecting a user-specific expression may further include determining whether there is a counterpart of the received voice or text, and generating a response to the received voice or text may be generating the response in further consideration of the determined counterpart.

The electronic device may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that with regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

As known in the art, the teaching of the present disclosure may also be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method of the present disclosure may also be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

Each component (e.g., a module or a program) of the above-described components may include a single entity or multiple entities, and some of the multiple entities may be separately disposed in different components. One or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. Operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a memory (130); and
a processor (120) operably connected to the memory (130),
wherein the processor (120) is configured to:
receive (1710) a text or voice;
detect (1720) a tone from the received voice or text;
detect (1730) a user-specific expression from the received voice or text, wherein the user-specific expression includes at least one of a dialect, a sentence ending form, a habitually used flowery word, and an expression on a specific topic;
generate (1740) a response to the received voice or text based on the detected tone and the detected user-specific expression, comprising at least one word corresponding to the user-specific expression acquired from a database; and
output (1750) the generated response as text or voice.

2. The electronic device (101) of claim 1, wherein the processor (120) is configured to:
determine a degree of formality from the detected tone; and
generate a response in further consideration of the determined degree of formality.

3. The electronic device (101) of claim 1, wherein the processor (120) is configured to:
determine a degree of fluency from the detected tone; and
generate a response in further consideration of the determined degree of fluency.

4. The electronic device (101) of claim 1, wherein the processor (120) is configured to:
determine a degree of sentiment from the detected tone; and
generate a response in further consideration of the determined degree of sentiment.

5. The electronic device (101) of claim 1, wherein the processor (120) is further configured to:
determine whether there is a user-specific general expression from the detected expression; and
determine whether there is a user-specific named-entity expression from the detected expression,
wherein a general expression is an expression excluding an entity, and
wherein a named-entity expression is a name for an entity.

6. The electronic device (101) of claim 1, wherein the processor (120) is configured to detect a user-specific expression by using a user log.

7. The electronic device (101) of claim 6, wherein the user log includes at least one of a text message log, a call log, or content of a site frequently visited by a user.

8. The electronic device (101) of claim 7, wherein the processor (120) is configured to detect a user-specific expression by using the content of the site frequently visited by the user, and further detect a topic of the site.

9. The electronic device (101) of claim 1, wherein the processor (120) is configured to:
identify a time or place at which the text or voice is received; and
generate a response in further consideration of the identified time or place.

10. The electronic device (101) of claim 1, wherein the processor (120) is configured to:
determine whether there is a counterpart of the received voice or text; and
generate a response in further consideration of the determined counterpart.

11. An operation method of an electronic device (101), the operation method comprising:
receiving (1710) a text or voice;
detecting (1720) a tone from the received voice or text;
detecting (1730) a user-specific expression from the received voice or text, wherein the user-specific expression includes at least one of a dialect, a sentence ending form, a habitually used flowery word, and an expression on a specific topic;
generating (1740) a response to the received voice or text based on the detected tone and the detected user-specific expression comprising at least one word corresponding to the user-specific expression acquired from a database; and
outputting (1750) the generated response as text or voice.

12. The operation method of claim 11, further comprising determining a degree of formality from the detected tone, and wherein generating a response to the received voice or text is generating the response in further consideration of the determined degree of formality.

13. The operation method of claim 11, further comprising determining a degree of fluency from the detected tone, and wherein generating a response to the received voice or text is generating the response in further consideration of the determined degree of fluency.

14. The operation method of claim 11, further comprising a degree of sentiment from the detected tone, and wherein generating a response to the received voice or text is generating the response in further consideration of the determined degree of sentiment.

15. The operation method of claim 11, wherein detecting a user-specific expression further comprises:
determining whether there is a user-specific general expression from the detected expression; and
determining whether there is a user-specific named-entity expression from the detected expression,
wherein a general expression is an expression excluding an entity, and
wherein a named-entity expression is a name for an entity.

## Patentansprüche

1. Elektronische Vorrichtung (101), umfassend:
einen Speicher (130); und
einen Prozessor (120), der betriebsfähig mit dem Speicher (130) verbunden ist,
wobei der Prozessor (120) konfiguriert ist zum:
Empfangen (1710) eines Textes oder einer Sprache;
Erkennen (1720) eines Tons aus der empfangenen Sprache oder dem empfangenen Text;
Erkennen (1730) eines benutzerspezifischen Ausdrucks aus der empfangenen Sprache oder dem empfangenen Text, wobei der benutzerspezifische Ausdruck mindestens eines von einem Dialekt, einer Satzendungsform, einer gewohnheitsmäßig verwendeten Floskel und einem Ausdruck zu einem spezifischen Thema beinhaltet;
Erzeugen (1740) einer Antwort auf die empfangene Sprache oder den empfangenen Text basierend auf dem erkannten Ton und dem erkannten benutzerspezifischen Ausdruck, umfassend mindestens ein Wort, das dem aus einer Datenbank erhaltenen benutzerspezifischen Ausdruck entspricht; und
Ausgeben (1750) der erzeugten Antwort als Text oder Sprache.

2. Elektronische Vorrichtung (101) nach Anspruch 1, wobei der Prozessor (120) konfiguriert ist zum:
Bestimmen eines Formalitätsgrades aus dem erkannten Ton; und
Erzeugen einer Antwort unter weiterer Berücksichtigung des bestimmten Formalitätsgrades.

3. Elektronische Vorrichtung (101) nach Anspruch 1, wobei der Prozessor (120) konfiguriert ist zum:
Bestimmen eines Sprachflüssigkeitsgrades aus dem erkannten Ton; und
Erzeugen einer Antwort unter weiterer Berücksichtigung des bestimmten Sprachflüssigkeitsgrades.

4. Elektronische Vorrichtung (101) nach Anspruch 1, wobei der Prozessor (120) konfiguriert ist zum:
Bestimmen eines Stimmungsgrades aus dem erkannten Ton; und
Erzeugen einer Antwort unter weiterer Berücksichtigung des bestimmten Stimmungsgrades.

5. Elektronische Vorrichtung (101) nach Anspruch 1, wobei der Prozessor (120) ferner konfiguriert ist zum:
Bestimmen, ob ein benutzerspezifischer allgemeiner Ausdruck vorhanden ist, aus dem erkannten Ausdruck; und
Bestimmen, ob ein benutzerspezifischer Ausdruck einer benannten Entität vorhanden ist, aus dem erkannten Ausdruck,
wobei ein allgemeiner Ausdruck ein Ausdruck ist, der eine Entität ausschließt, und
wobei ein Ausdruck einer benannten Entität ein Name für eine Entität ist.

6. Elektronische Vorrichtung (101) nach Anspruch 1, wobei der Prozessor (120) konfiguriert ist zum Erkennen eines benutzerspezifischen Ausdrucks unter Verwendung eines Benutzerprotokolls.

7. Elektronische Vorrichtung (101) nach Anspruch 6, wobei das Benutzerprotokoll mindestens eines von einem Textnachrichtenprotokoll, einem Anrufprotokoll oder einem Inhalt einer von einem Benutzer häufig besuchten Website beinhaltet.

8. Elektronische Vorrichtung (101) nach Anspruch 7, wobei der Prozessor (120) konfiguriert ist zum Erkennen eines benutzerspezifischen Ausdrucks unter Verwendung des Inhalts der von dem Benutzer häufig besuchten Website und ferner zum Erkennen eines Themas der Website.

9. Elektronische Vorrichtung (101) nach Anspruch 1, wobei der Prozessor (120) konfiguriert ist zum:
Identifizieren eines Zeitpunkts oder Orts, an dem der Text oder die Sprache empfangen wird; und
Erzeugen einer Antwort unter weiterer Berücksichtigung des identifizierten Zeitpunkts oder Orts.

10. Elektronische Vorrichtung (101) nach Anspruch 1, wobei der Prozessor (120) konfiguriert ist zum:
Bestimmen, ob ein Gegenüber der empfangenen Sprache oder des empfangenen Textes vorhanden ist; und
Erzeugen einer Antwort unter weiterer Berücksichtigung des bestimmten Gegenübers.

11. Betriebsverfahren einer elektronischen Vorrichtung (101), wobei das Betriebsverfahren Folgendes umfasst:
Empfangen (1710) eines Textes oder einer Sprache;
Erkennen (1720) eines Tons aus der empfangenen Sprache oder dem empfangenen Text;
Erkennen (1730) eines benutzerspezifischen Ausdrucks aus der empfangenen Sprache oder dem empfangenen Text, wobei der benutzerspezifische Ausdruck mindestens eines von einem Dialekt, einer Satzendungsform, einer gewohnheitsmäßig verwendeten Floskel und einem Ausdruck zu einem spezifischen Thema beinhaltet;
Erzeugen (1740) einer Antwort auf die empfangene Sprache oder den empfangenen Text basierend auf dem erkannten Ton und dem erkannten benutzerspezifischen Ausdruck, umfassend mindestens ein Wort, das dem aus einer Datenbank erhaltenen benutzerspezifischen Ausdruck entspricht; und
Ausgeben (1750) der erzeugten Antwort als Text oder Sprache.

12. Betriebsverfahren nach Anspruch 11, ferner umfassend das Bestimmen eines Formalitätsgrades aus dem erkannten Ton, und wobei das Erzeugen einer Antwort auf die empfangene Sprache oder den empfangenen Text das Erzeugen der Antwort unter weiterer Berücksichtigung des bestimmten Formalitätsgrades ist.

13. Betriebsverfahren nach Anspruch 11, ferner umfassend das Bestimmen eines Sprachflüssigkeitsgrades aus dem erkannten Ton, und wobei das Erzeugen einer Antwort auf die empfangene Sprache oder den empfangenen Text das Erzeugen der Antwort unter weiterer Berücksichtigung des bestimmten Sprachflüssigkeitsgrades ist.

14. Betriebsverfahren nach Anspruch 11, ferner umfassend einen Stimmungsgrad aus dem erkannten Ton, und wobei das Erzeugen einer Antwort auf die empfangene Sprache oder den empfangenen Text das Erzeugen der Antwort unter weiterer Berücksichtigung des bestimmten Stimmungsgrades ist.

15. Betriebsverfahren nach Anspruch 11, wobei das Erkennen eines benutzerspezifischen Ausdrucks ferner Folgendes umfasst:
Bestimmen, ob ein benutzerspezifischer allgemeiner Ausdruck vorhanden ist, aus dem erkannten Ausdruck; und
Bestimmen, ob ein benutzerspezifischer Ausdruck einer benannten Entität vorhanden ist, aus dem erkannten Ausdruck,
wobei ein allgemeiner Ausdruck ein Ausdruck ist, der eine Entität ausschließt, und
wobei ein Ausdruck einer benannten Entität ein Name für eine Entität ist.

## Revendications

1. Dispositif électronique (101) comprenant :
une mémoire (130) ; et
un processeur (120) connecté de manière opérationnelle à la mémoire (130),
dans lequel le processeur (120) est configuré pour :
recevoir (1710) un texte ou une voix ;
détecter (1720) un ton à partir de la voix ou du texte reçu ;
détecter (1730) une expression spécifique à l'utilisateur à partir de la voix ou du texte reçu, dans lequel l'expression spécifique à l'utilisateur comprend au moins l'un d'un dialecte, d'une forme de fin de phrase, d'un mot fleuri habituellement utilisé et d'une expression sur un sujet spécifique ;
générer (1740) une réponse à la voix ou au texte reçu sur la base du ton détecté et de l'expression spécifique à l'utilisateur détectée, comprenant au moins un mot correspondant à l'expression spécifique à l'utilisateur obtenue à partir d'une base de données ; et
délivrer en sortie (1750) la réponse générée sous forme de texte ou de voix.

2. Dispositif électronique (101) de la revendication 1, dans lequel le processeur (120) est configuré pour :
déterminer un degré de formalité à partir du ton détecté ; et
générer une réponse en tenant en outre compte du degré de formalité déterminé.

3. Dispositif électronique (101) de la revendication 1, dans lequel le processeur (120) est configuré pour :
déterminer un degré de fluidité à partir du ton détecté ; et
générer une réponse en tenant en outre compte du degré de fluidité déterminé.

4. Dispositif électronique (101) de la revendication 1, dans lequel le processeur (120) est configuré pour :
déterminer un degré de sentiment à partir du ton détecté ; et
générer une réponse en tenant en outre compte du degré de sentiment déterminé.

5. Dispositif électronique (101) de la revendication 1, dans lequel le processeur (120) est en outre configuré pour :
déterminer s'il existe une expression générale spécifique à l'utilisateur à partir de l'expression détectée ; et
déterminer s'il existe une expression d'entité nommée spécifique à l'utilisateur à partir de l'expression détectée,
dans lequel une expression générale est une expression excluant une entité, et
dans lequel une expression d'entité nommée est un nom d'une entité.

6. Dispositif électronique (101) de la revendication 1, dans lequel le processeur (120) est configuré pour détecter une expression spécifique à l'utilisateur en utilisant un journal d'utilisateur.

7. Dispositif électronique (101) de la revendication 6, dans lequel le journal d'utilisateur comprend au moins l'un d'un journal de messages texte, d'un journal d'appels ou d'un contenu d'un site fréquemment visité par un utilisateur.

8. Dispositif électronique (101) de la revendication 7, dans lequel le processeur (120) est configuré pour détecter une expression spécifique à l'utilisateur en utilisant le contenu du site fréquemment visité par l'utilisateur, et détecter en outre un sujet du site.

9. Dispositif électronique (101) de la revendication 1, dans lequel le processeur (120) est configuré pour :
identifier un moment ou un lieu où le texte ou la voix est reçu ; et
générer une réponse en tenant en outre compte du moment ou du lieu identifié.

10. Dispositif électronique (101) de la revendication 1, dans lequel le processeur (120) est configuré pour :
déterminer s'il existe un interlocuteur de la voix ou du texte reçu ; et
générer une réponse en tenant en outre compte de l'interlocuteur déterminé.

11. Procédé de fonctionnement d'un dispositif électronique (101), le procédé de fonctionnement comprenant :
recevoir (1710) un texte ou une voix ;
détecter (1720) un ton à partir de la voix ou du texte reçu ;
détecter (1730) une expression spécifique à l'utilisateur à partir de la voix ou du texte reçu, dans lequel l'expression spécifique à l'utilisateur comprend au moins l'un d'un dialecte, d'une forme de fin de phrase, d'un mot fleuri habituellement utilisé et d'une expression sur un sujet spécifique ;
générer (1740) une réponse à la voix ou au texte reçu sur la base du ton détecté et de l'expression spécifique à l'utilisateur détectée, comprenant au moins un mot correspondant à l'expression spécifique à l'utilisateur obtenue à partir d'une base de données ; et
délivrer en sortie (1750) la réponse générée sous forme de texte ou de voix.

12. Procédé de fonctionnement de la revendication 11, comprenant en outre la détermination d'un degré de formalité à partir du ton détecté, et dans lequel la génération d'une réponse à la voix ou au texte reçu consiste à générer la réponse en tenant en outre compte du degré de formalité déterminé.

13. Procédé de fonctionnement de la revendication 11, comprenant en outre la détermination d'un degré de fluidité à partir du ton détecté, et dans lequel la génération d'une réponse à la voix ou au texte reçu consiste à générer la réponse en tenant en outre compte du degré de fluidité déterminé.

14. Procédé de fonctionnement de la revendication 11, comprenant en outre un degré de sentiment à partir du ton détecté, et dans lequel la génération d'une réponse à la voix ou au texte reçu consiste à générer la réponse en tenant en outre compte du degré de sentiment déterminé.

15. Procédé de fonctionnement de la revendication 11, dans lequel la détection d'une expression spécifique à l'utilisateur comprend en outre :
déterminer s'il existe une expression générale spécifique à l'utilisateur à partir de l'expression détectée ; et
déterminer s'il existe une expression d'entité nommée spécifique à l'utilisateur à partir de l'expression détectée,
dans lequel une expression générale est une expression excluant une entité, et
dans lequel une expression d'entité nommée est un nom d'une entité.
